# EUROPEAN PATENT SPECIFICATION

(11) **EP 3 118 075 B1**
(45) Date of publication and mention of the grant of the patent: **02.05.2018**
(21) Application number: 15002077.4
(22) Date of filing: 13.07.2015
(51) Int. Cl.: B60T 13/74

(54) **ELECTROPNEUMATIC BRAKE ACTUATOR**
ELEKTROPNEUMATISCHER BREMSAKTUATOR
ACTIONNEUR DE FREIN ÉLECTROPNEUMATIQUE

(43) Date of publication of application: 18.01.2017
(73) Proprietor: WABCO Europe BVBA, 1170 Brussels (BE)
(72) Inventor: Zbylut, Michal, 42-400 Zawiercie (PL)
(74) Representative: Lauerwald, Jörg

(56) References cited:
- EP-A1- 2 177 411
- DE-A1-102007 012 074
- DE-A1-102007 015 809

## Description

The invention relates to a brake actuator for a commercial vehicle, said brake actuator comprising a housing, a push rod that is slidably arranged in said housing and adapted to move along an axis A for transmitting a brake force to a brake mechanism, and a parking brake unit. A brake actuator of this type is known from DE 102007015809 A. Brake actuators of the aforementioned type are commonly used in the commercial vehicle industry, in particular for trucks and busses and other vehicles carrying heavy loads to transmit braking force from a fluid pressure circuit to a brake mechanism, which might either be a drum brake system or a disc brake system. The most common fluid type used in braking systems of commercial vehicles is compressed gas such as air. Consequently, the term fluid is understood to explicitly encompass compressed gas such as air relating to the invention.
The brake actuators are employed to either supply a service brake force which is commanded by e.g. a foot paddle in the driver cabin to the brake mechanism, or to provide a parking brake force which is commanded e.g. by a hand brake lever in the driver cabin to the brake mechanism.
Conventional brake actuators of the aforementioned type often rely on spring brake actuators to provide the parking brake function. While the spring brake actuators have been tested and used for a long time and generally provide very satisfactory function, it has been observed that they require considerable technical knowledge and manufacturing effort.

Current commercial vehicle design is increasingly demanding regarding the space consumed by brake actuators as well as the overall weight of the brake actuators. It has therefore been an object of the invention to provide a brake actuator with parking brake functionality at a reduced build size.

The invention attains this object by suggesting a brake actuator of the initially mentioned type which is an electropneumatic brake actuator and wherein the parking brake unit comprises an electromagnetic actuator that is adapted to move the push rod along axis A between a retention position and an extension position for transmitting a parking brake force to the brake mechanism. The invention follows the approach to replace the mechanical spring-loaded portion of the brake actuator housing by the electromagnetic actuator which is much more compact in size. A particular additional advantage of the invention is that the electromagnetic actuator is entirely harmless for users such as maintenance personnel when in the deactivated state without electricity, whereas the spring brake actuator known from the prior art has a significant safety risk due to the fact that the compression spring used in the spring-loaded portion of those actuators carries a high potential energy in its biased state. Unauthorized and/or unqualified opening of the spring-loading portion of the known brake actuator housings would potentially lead to devastating injuries.

In a preferred embodiment, the electromagnetic actuator is coupled with the push rod through a transmission.

The electromagnetic actuator comprises in a preferred embodiment a stator for generating a rotating (electro-) magnetic field and a rotor, said rotor being driven by the rotating magnetic field. The stator and rotor are preferably part of a DC electric motor, in particular a brushless DC electric motor. Advantageously, the DC electric motor uses the vehicle's battery as an energy source.

The stator preferably comprises a plurality of solenoids for creating the rotating magnetic field. The rotor preferably is a permanent magnetic rotor.

In a further preferred embodiment, the rotor is secured against movement in the direction of axis A. By doing so, the rotor is restricted to conducting a rotary movement when driven by the stator, reducing side effects caused by the magnetic field to the movement of the push rod.

The transmission of the brake actuator is in a preferred embodiment adapted to transfer a rotary movement of the rotor into a sliding movement of the push rod in the direction of axis A. Preferentially, the transmission comprises a, preferably self-locking, screw drive, said screw drive preferably having a gear coupled to the rotor and a shaft that is slidably arranged in said housing and adapted to move along axis A for interacting with the push rod. Self-locking is understood to incorporate a screw pitch which is sufficiently reduced such that any return forces or mechanical feedback effective in the direction of axis A, i.e. from the extension position towards the retention position of the push rod, does not lead to a movement of the shaft. By reducing the screw pitches sufficiently far, the driving force necessary for the magnetic field of the stator is also reduced, allowing for compact build and low energy demand when maintaining the magnetic field. The gear coupled to the rotor may be a threaded portion in the rotor, forming a uni-body design with said rotor, or maybe an additional part fixedly attached to the rotor. The shaft preferably comprises a correspondingly flatted pitch. The shaft and the pushrod preferentially are slidably supported with respect to one another. If the push rod is in a preferred embodiment arranged coaxially and inside the shaft, the push rod preferably is supported in the shaft by a sliding bushing.

In a further preferred embodiment, the push rod comprises a catch projecting radially from axis A, and the shaft is adapted to abut against and push the catch when moved by the rotor. In particular, the shaft is adapted to abut against and push the catch towards the extension position of the push rod when moved by the rotor in a first rotational direction, and to move in the opposite direction when the rotor is driven in an opposite, second rotary direction.
The brake actuator preferably comprises a return spring that is biased to urge the push rod towards the retention position. By urging the push rod towards the retention position, the catch of the push rod is also urged against the shaft. Accordingly, when the shaft moves back towards the retention position, so does the push rod. Accordingly, the electromagnetic actuator serves not only to apply the parking brake force, but also to unlock/deactivate the parking brake.
In a further preferred embodiment, the brake actuator comprises a rotary spring that is biased to apply a torque to the rotor in that rotary direction which drives the shaft and push rod towards the extension position. In the above-referenced terminology, this would be the first rotary direction. The torque bias of the rotary spring preferably is sufficiently high such that even in the extension position of the shaft and push rod, the parking brake force is maintained in the absence of a magnetic field from the stator. This way, the rotary spring ensures that even in the event of a electrical power breakdown, the parking brake force remains intact. If there should be an instance where the electrical power source brakes down during operation of the car, the rotary spring would cause a rotation of the rotor and thus a movement of the shaft causing the push rod to be moved towards the extension position and cause an emergency application of the parking brake. The magnetic field created by the stator, in turn, is preferably sufficiently strong to hold the rotary spring in a biased state corresponding to the position of the shaft. In an alternatively preferred embodiment, the rotary spring is not held by the stator of the electromagnetic actuator, but by a dedicated second electromagnetic actuator.

The housing of the brake actuator of the invention preferably comprises a first chamber, a second chamber and a flexible membrane separating the first and second chambers from one another. The first chamber preferably comprises the push rod and the rotor of the electromagnetic actuator. Optionally, the first chamber also comprises the shaft and/or return spring and/or rotary spring and/or stator. It shall be understood that in the extension position, the pushrod and (when actuated) the shaft may be partly outside of the housing.

The second chamber preferably comprises a fluid port for connection to a source of pressurized fluid, preferably air. Further preferred, the flexible membrane is facing the push rod. This setup leads to the following functionality: The second chamber may in operation be pressurized through the source of pressurized fluid. Preferably, the source of pressurized fluid will be the service brake line of the commercial vehicle. When pressurized fluid is led into the second chamber through the fluid port, the flexibility of the membrane leads to a volume increase in the second chamber. The flexible membrane is flexed and displaced towards the push rod. When the fluid pressure inside the second chamber increases sufficiently, the membrane not only touches the push rod but furthermore displaces the push rod away from the retention position towards the extension position, thus transfusing the pressure in the second chamber to a mechanical brake force. The service brake functionality may thus be operated entirely independent from the parking brake functionality, responsibility for which lies with the electromagnetic actuator.

In a preferred embodiment, the stator of the electromagnetic actuator is spaced apart from the rotor by an air gap.

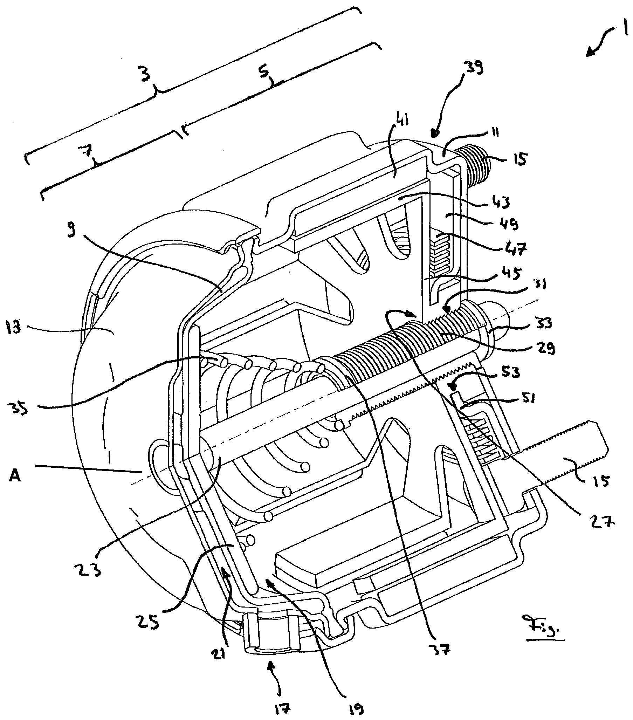

For a more complete understanding of the invention, the invention will now be described in more detail with reference to the accompanying drawing. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and is claimed hereinafter.

Further, the features described in the description, the drawing and the claims disclosing the invention may be essential for the invention considered alone or in combination.

In particular, any reference signs in the claims shall not be construed as limiting the scope of the invention. The word "comprising" does not exclude other elements or steps. The wording "a" or "an" does not exclude a plurality.

In brief, the figure to which reference will be made shows:
a schematic cross-sectional view of a brake actuator according to a preferred exemplary embodiment.
The figure shows an electropneumatic brake actuator 1 according to a preferred embodiment. The pneumatic brake actuator 1 comprises a housing 3. The housing 3 comprises a parking brake unit 5 and a service brake unit 7. The pneumatic brake actuator 1 further comprises a flexible membrane 9 which sealingly separates the parking brake unit 5 from the service brake unit 7 of the housing 3. The parking brake unit 5 comprises a side wall 11. Likewise, the service brake unit 7 comprises a cover 13.
The pneumatic brake actuator 1 comprises a plurality of mounting bolts 15 for attaching the entire apparatus to a brake system of a vehicle.
The service brake unit 7 comprises a fluid port 17 which is provided in the cover 13 and is adapted to transfer preferred fluid such as pressurized air into and out of the service brake unit 7.
The parking brake unit 5 comprises a first chamber 19. The service brake unit 7 comprises a second chamber 21. The first and second chambers 19, 21 are separated from one another by means of the flexible membrane 9, which is located such that it faces a push rod 23. The push rod 23 is located inside the parking brake unit 5 and is slidingly supported such that it is able to move in the direction of axis A. The figure shows the push rod 23 in its retention position. When actuated, the push rod 23 moves towards a extension position (not shown) which is to the right side in the shown orientation.
The push rod 23 comprises a piston plate 25 adapted to be in contact with the flexible membrane 9.

In operation, when pressurized fluid is led through fluid port 17 into the second chamber 21, the flexible membrane will displace the push rod 23 by way of contacting the piston plate 25 away from the retention position and towards the extension position.

The flexible membrane 9 is however not the only actuation means for the push rod 23. The pneumatic brake actuator 1 comprises an electromagnetic actuator 39. The electromagnetic actuator 39 comprises a stator 41 radially inwards of which there is arranged a rotor 43 which preferably is a permanent magnetic rotor. The rotor 43 is connected through a flange 45 with a transmission 27. In the shown embodiment, the transmission 27 is a self-locking screw drive. The transmission 27 comprises a shaft 29 which engages a gear 31 coupled to the rotor 43.

The rotor 43 is fixed with respect to the direction of axis A and is rotatable supported in the side wall 11.

In operation, the stator 41 creates a rotating magnetic field which drives the rotor 43. By way of engagement with the gear 31 of transmission 27, the shaft 29 moves in the direction of axis A. The shaft 29 abuts against a catch 33 in the shape of a radial projection of the push rod 23 and pushes the push rod 23 from the retention position towards the extension position when the rotor 43 is rotated in a first direction.

The shaft 29 comprises a stop shoulder 37. A return spring 35 is located between the stop shoulder 37 of the shaft 29 and the piston plate 25 of the push rod 23. The return spring 35 is effective to push the push rod 23 towards the retention position. When the shaft 29 is moved from the extension position towards the retention position by rotation of the rotor 43 in a second rotary direction opposite the first rotary direction, the return spring 35 urges the push rod 23 against the shaft 29 and thus towards the retention position of the push rod 23.

The rotor 43 is coupled to a rotary spring 47. The rotary spring is biased to apply a torque to the rotor 43 in that rotary direction which drives the shaft 29 and push rod 23 towards the extension position which in the figure is towards the right side. The rotary spring 47 is preferably fixed with one end portion (not shown) to the cover 11 and/or disc 49 and with another end portion (not shown) to the rotor flange 45.

A disc 49 is fixedly attached to the sidewall 11. The disc 49 comprises an annular guide ring 51 which engages a groove 53 provided in the rotor 43 such that the rotor 43 is rotatably held and retained against axial movement, both with respect to axis A. In the preferred embodiment shown, the rotary spring 47 is sandwiched between the rotor flange 45 and the disc 49. Thus, the rotary spring is protected against any unwanted evasive movement in the direction of axis A.

As is evident from the depicted preferred embodiment, the invention achieves the underlying object and provides an extremely space-saving design, in particular in the stroke direction of the push rod (axis A). By integrating the parking brake function into the same chamber which also accommodates the push rod, the design complexity of the entire electropneumatic actuator 1 is kept at a minimum. The axial space demand of the service brake chamber, or second chamber 21, is kept to a minimum.

### List of reference signs

- 1: pneumatic brake actuator
- 3: housing
- 5: parking brake unit
- 7: service brake unit
- 9: flexible membrane
- 11: side wall of parking brake unit 5
- 13: cover of service brake unit 7
- 15: mounting bold
- 17: fluid port
- 19: first chamber
- 21: second chamber
- 23: push rod
- 25: piston plate
- 27: transmission
- 29: shaft
- 31: gear
- 33: catch
- 35: return spring
- 37: stop shoulder
- 39: electromagnetic actuator
- 41: stator
- 43: rotor
- 45: rotor flange
- 47: rotary spring
- 49: disc
- 51: annular guide section
- 53: groove

## Claims

1. An electropneumatic brake actuator (1) for a commercial vehicle, said brake actuator (1) comprising
- a housing (3),
- a push rod (23) that is slidably arranged in said housing (3) and adapted to move along an axis (A) for transmitting a brake force to a brake mechanism, and
- a parking brake unit (5),
**characterized in that** the parking brake unit (5) comprises an electromagnetic actuator (39) that is adapted to move the push rod (23) along axis (A) between a retention position and an extension position for transmitting a parking brake force to the brake mechanism.

2. The brake actuator (1) of claim 1,
wherein the electromagnetic actuator (39) is coupled with the push rod (23) through a transmission (27).

3. The brake actuator (1) of claim 1 or 2,
wherein the electromagnetic actuator (39) comprises a stator (41) for generating a rotating magnetic field and a rotor (43), said rotor (43) being driven by the rotating magnetic field

4. The brake actuator (1) of claim 3,
wherein the rotor (43) is secured against movement in the direction of axis (A).

5. The brake actuator (1) of claim 2 and claim 3 or 4, wherein the transmission (27) is adapted to transfer a rotary movement of the rotor (43) into a sliding movement of the push rod (23) in the direction of axis (A).

6. The brake actuator (1) of any one of claims 2 to 5,
wherein the transmission (27) comprises a, preferably self-locking, screw drive, said screw drive having a gear (31) coupled to the rotor (43) and a shaft (29) that is slidably arranged in said housing (3) and adapted to move along axis (A) for interacting with the push rod (23).

7. The brake actuator (1) of claim 6,
wherein the push rod (23) comprises a catch (33) projecting radially from axis (A), and the shaft (29) is adapted to abut against and push the catch (33) when moved by the rotor (43).

8. The brake actuator (1) of any one of the preceding claims
comprising a return spring (35) that is biased to urge the push rod (23) towards the retention position.

9. The brake actuator (1) of any one of claims 3 to 8,
comprising a rotary spring (47) that is biased to apply a torque to the rotor (43) in that rotary direction which drives the shaft (29) and push rod (23) towards the extension position.

10. The brake actuator (1) of any one of the preceding claims,
wherein the housing (3) comprises a first chamber (19), a second chamber (21), and a flexible membrane (9) separating the first and second chambers (19, 21) from one another.

11. The brake actuator (1) of claim 10,
wherein the first chamber (19) comprises the push rod (23) and the rotor (43) of the electromagnetic actuator (39).

12. The brake actuator (1) of claim 10 or 11,
wherein the second chamber (21) comprises a fluid port (17) for connection to a source of pressurized fluid, and wherein the flexible membrane (9) is facing the push rod (23).

13. The brake actuator (1) of any one of claims 3 to 12, wherein the stator (41) of the electromagnetic actuator (39) is arranged inside the housing (3), in particular within the first chamber (19).

## Patentansprüche

1. Elektropneumatischer Bremsaktor (1) für ein Nutzfahrzeug, wobei der Bremsaktor (1) Folgendes umfasst:
- ein Gehäuse (3),
- eine Schubstange (23), die in dem Gehäuse (3) gleitend angeordnet ist und dafür ausgelegt ist, sich längs einer Achse (A) zu bewegen, um an einen Bremsmechanismus eine Bremskraft zu übertragen, und
- eine Parkbremseinheit (5),
**dadurch gekennzeichnet, dass** die Parkbremseinheit (5) einen elektromagnetischen Aktor (39) umfasst, der dafür ausgelegt ist, die Schubstange (23) längs der Achse (A) zwischen einer eingefahrenen Position und einer ausgefahrenen Position zu bewegen, um eine Parkbremskraft an den Bremsmechanismus zu übertragen.

2. Bremsaktor (1) nach Anspruch 1, wobei der elektromagnetische Aktor (39) mit der Schubstange (23) über ein Getriebe (27) gekoppelt ist.

3. Bremsaktor (1) nach Anspruch 1 oder 2,
wobei der elektromagnetische Aktor (39) einen Stator (41) zum Erzeugen eines rotierenden Magnetfeldes und einen Rotor (43) umfasst, wobei der Rotor (43) durch das rotierende Magnetfeld angetrieben wird.

4. Bremsaktor (1) nach Anspruch 3,
wobei der Rotor (43) gegen eine Bewegung in Richtung der Achse (A) fixiert ist.

5. Bremsaktor (1) nach Anspruch 2 und Anspruch 3 oder 4,
wobei das Getriebe (27) dafür ausgelegt ist, eine Drehbewegung des Rotors (43) in eine Gleitbewegung der Schubstange (23) in Richtung der Achse (A) umzuwandeln.

6. Bremsaktor (1) nach einem der Ansprüche 2 bis 5,
wobei das Getriebe (27) einen vorzugsweise selbstverriegelnden Schneckenantrieb umfasst, wobei der Schneckenantrieb ein mit dem Rotor (43) gekoppeltes Zahnrad (31) und eine in dem Gehäuse (3) gleitend angeordnete Welle (29), die dafür ausgelegt ist, sich längs der Achse (A) zu bewegen, um mit der Schubstange (23) in Wechselwirkung zu treten, besitzt.

7. Bremsaktor (1) nach Anspruch 6,
wobei die Schubstange (23) eine Klinke (33) aufweist, die von der Achse (A) radial vorsteht, und die Welle (29) dafür ausgelegt ist, an der Klinke (23) anzuliegen und diese zu schieben, wenn sie durch den Rotor (43) bewegt wird.

8. Bremsaktor (1) nach einem der vorhergehenden Ansprüche,
der eine Rückstellfeder (35) umfasst, die so vorbelastet ist, dass sie die Schubstange (23) in die eingefahrene Position drängt.

9. Bremsaktor (1) nach einem der Ansprüche 3 bis 8,
der eine Drehfeder (47) umfasst, die so vorbelastet ist, dass sie auf den Rotor (43) ein Drehmoment in jener Drehrichtung ausübt, in der die Welle (29) und die Schubstange (23) in die ausgefahrene Position angetrieben werden.

10. Bremsaktor (1) nach einem der vorhergehenden Ansprüche,
wobei das Gehäuse (3) eine erste Kammer (19), eine zweite Kammer (21) und eine biegsame Membran (9), die die erste und die zweite Kammer (19, 21) voneinander trennt, umfasst.

11. Bremsaktor (1) nach Anspruch 10,
wobei die erste Kammer (19) die Schubstange (23) und den Rotor (43) des elektromagnetischen Aktors (39) enthält.

12. Bremsaktor (1) nach Anspruch 10 oder 11,
wobei die zweite Kammer (21) einen Fluidanschluss (17) für eine Verbindung mit einer Quelle für mit Druck beaufschlagtes Fluid umfasst und wobei die biegsame Membran (9) der Schubstange (23) zugewandt ist.

13. Bremsaktor (1) nach einem der Ansprüche 3 bis 12,
wobei der Stator (41) des elektromagnetischen Aktors (39) in dem Gehäuse (3), insbesondere in der ersten Kammer (19), angeordnet ist.

## Revendications

1. Actionneur de frein électropneumatique (1) pour un véhicule commercial, ledit actionneur de frein (1) comprenant :
- un boîtier (3),
- une tige poussoir (23) qui est disposée de manière à pouvoir coulisser dans ledit boîtier (3) et qui est prévue pour se déplacer le long d'un axe (A) pour transmettre une force de freinage à un mécanisme de freinage, et
- une unité de frein de stationnement (5),
**caractérisé en ce que** l'unité de frein de stationnement (5) comprend un actionneur électromagnétique (39) qui est prévu pour déplacer la tige poussoir (23) le long de l'axe (A) entre une position de retenue et une position d'extension pour transmettre une force de freinage de stationnement au mécanisme de freinage.

2. Actionneur de frein (1) selon la revendication 1, dans lequel l'actionneur électromagnétique (39) est accouplé à la tige poussoir (23) par le biais d'une transmission (27).

3. Actionneur de frein (1) selon la revendication 1 ou 2,
dans lequel l'actionneur électromagnétique (39) comprend un stator (41) pour générer un champ magnétique rotatif et un rotor (43), ledit rotor (43) étant entraîné par le champ magnétique rotatif.

4. Actionneur de frein (1) selon la revendication 3, dans lequel le rotor (43) est fixé contre tout mouvement dans la direction de l'axe (A).

5. Actionneur de frein (1) selon la revendication 2 et la revendication 3 ou 4,
dans lequel la transmission (27) est prévue pour convertir un mouvement de rotation du rotor (43) en un mouvement de coulissement de la tige poussoir (23) dans la direction de l'axe (A).

6. Actionneur de frein (1) selon l'une quelconque des revendications 2 à 5,
dans lequel la transmission (27) comprend un entraînement à vis, de préférence auto-bloquant, ledit entraînement à vis ayant un engrenage (31) accouplé au rotor (43) et un arbre (29) disposé de manière à pouvoir coulisser dans ledit boîtier (3) et prévu pour se déplacer le long de l'axe (A) pour interagir avec la tige poussoir (23).

7. Actionneur de frein (1) selon la revendication 6, dans lequel la tige poussoir (23) comprend un taquet (33) faisant saillie radialement depuis l'axe (A) et l'arbre (29) est prévu pour buter contre le taquet (33) et pour le pousser lorsqu'il est déplacé par le rotor (43).

8. Actionneur de frein (1) selon l'une quelconque des revendications précédentes,
comprenant un ressort de rappel (35) qui est sollicité de manière à pousser la tige poussoir (23) vers la position de retenue.

9. Actionneur de frein (1) selon l'une quelconque des revendications 3 à 8,
comprenant un ressort rotatif (47) qui est sollicité de manière à appliquer un couple au rotor (43) dans la direction de rotation qui entraîne l'arbre (29) et la tige poussoir (23) vers la position d'extension.

10. Actionneur de frein (1) selon l'une quelconque des revendications précédentes,
dans lequel le boîtier (3) comprend une première chambre (19), une deuxième chambre (21), et une membrane flexible (9) séparant la première et la deuxième chambre (19, 21) l'une de l'autre.

11. Actionneur de frein (1) selon la revendication 10, dans lequel la première chambre (19) comprend la tige poussoir (23) et le rotor (43) de l'actionneur électromagnétique (39).

12. Actionneur de frein (1) selon la revendication 10 ou 11,
dans lequel la deuxième chambre (21) comprend un orifice de fluide (17) destiné à être connecté à une source de fluide sous pression, et dans lequel la membrane flexible (9) fait face à la tige poussoir (23).

13. Actionneur de frein (1) selon l'une quelconque des revendications 3 à 12,
dans lequel le stator (41) de l'actionneur électromagnétique (39) est disposé à l'intérieur du boîtier (3), en particulier à l'intérieur de la première chambre (19).
